# EUROPEAN PATENT APPLICATION

(11) **EP 2 599 707 A1**
(43) Date of publication of application: **05.06.2013**
(21) Application number: 11811998.1
(22) Date of filing: 13.07.2011
(51) Int. Cl.: B62M 6/70, B62J 6/02

(54) **ELECTRIC BICYCLE**

(30) Priority: 27.07.2010 JP 2010167651
(71) Applicant: Panasonic Corporation, Osaka 571-8501 (JP)
(72) Inventor: TANIDA, Masato, Osaka 540-6207 (JP)
(74) Representative: Grünecker, Kinkeldey, Stockmair & Schwanhäusser
(86) International application number: PCT/JP2011/004000
(87) International publication number: WO 2012/014396

(57) **Abstract**

An electric bicycle is provided that can turn on a front light and generate electric power while minimizing an increase in load to a rider even in the case where the remaining capacity of a battery decreases. A motor driving unit 7 including a motor 25 is disposed at an intermediate position between a front wheel and a rear wheel, an auxiliary driving force output sprocket 27 for outputting an auxiliary driving force from the motor driving unit 7 is engaged with a chain, a force transmission path between a motor output shaft 25a and the auxiliary driving force output sprocket 27 has no clutches, human power is always transmitted to the motor 25 through the chain, and electric power is generated by the regeneration operation of the motor 25.

## Description

### Technical Field

The present invention relates to an electric bicycle that can be driven by an auxiliary driving force generated by a motor in addition to human power generated by pedaling, and can generate electric power from the motor by a regeneration operation to charge an accumulator, e.g., a battery acting as the power supply of the motor.

### Background Art

A known electric bicycle includes a battery composed of a secondary cell and a motor using the battery as a power supply. Such an electric bicycle can be smoothly driven uphill by adding an auxiliary driving force (assistance force) of the motor to human power generated by pedaling. Another known electric bicycle has a structure in which electric power is generated by a regeneration operation of a motor to charge a battery during braking and so on, increasing a travel distance in a single charging operation of the battery. For example, Patent Literature 1 discloses a technique of regenerative control in which a motor disposed in the hub of a front wheel is used as a generator during the application of a brake.

Since an electric bicycle includes a battery composed of a secondary cell, the battery is frequently used also as the power supply of a lighting unit, e.g., a head light without a dynamo (generator) that generates electric power in sliding contact with a front wheel. The battery is mainly used for driving a motor, leading to relatively large power consumption. Thus, in the case where the battery is used over an extended period, the remaining capacity of the battery may decrease and cause an insufficient auxiliary driving force and overdischarge, resulting in damage on the battery. For this reason, when the battery reaches a predetermined remaining capacity, the motor is stopped to prevent overdischarge of the battery.

At this point, the battery is electrically shut off from an overall electric circuit to stop the motor, so that the head light is turned off concurrently with the stopping of the motor. This is because the battery is also used as the power supply of a lighting unit, e.g., a head light. In this case, the head light is suddenly turned off during riding, which may cause danger during riding at night. However, the power consumption of the head light is smaller than that of the motor and the head light can be turned on with a relatively low voltage. Thus, the head light does not always need to be turned off concurrently with the stopping of the motor.

To address this problem, the present applicant has devised a technique as disclosed in Patent Literature 2. A battery reaches a predetermined remaining capacity for lighting, the remaining capacity being equal to or smaller than a remaining capacity for stopping a motor. At this point, the motor is caused to regenerate electric power for turning on a lighting unit, e.g., a head light. According to this technique, a lighting unit, e.g., a head light can be turned on even when the battery reaches the remaining capacity for lighting.

Also in Patent Literature 2, the motor is installed in the hub of a front wheel. Thus, in Patent Literature 2, in the case where the battery reaches the predetermined remaining capacity for lighting while a switch for turning on the lighting unit is located on an illuminating side, the remaining capacity being equal to or smaller than the remaining capacity for stopping the motor, a pedal force (human power) generated by pedaling of a rider is first transmitted to a rear wheel through a chain. Then, the rotary force of the rear wheel is transmitted to the ground to move forward the electric bicycle, the front wheel is rotated by a force received from the ground, and finally the motor is rotated by the rotation of the front wheel to regenerate electric power.

### Citation List

### Patent Literatures

Patent Literature 1: Japanese Patent Laid-Open No. 2004-149001
Patent Literature 2: Japanese Patent Laid-Open No. 2010-030539

### Summary of Invention

### Technical Problems

When electric power is regenerated by the motor in the electric bicycle including the motor installed in the hub of the front wheel, however, a force based on a pedal force applied from pedals is considerably lost before reaching the motor. Thus, a load to the pedals may extremely increase, disadvantageously leading to a larger load on the rider. Specifically, as has been discussed, in the electric bicycle including the motor installed in the hub of the front wheel, a pedal force (human force) of the rider is first transmitted to the rear wheel through the chain. Then, the rotary force of the rear wheel is transmitted to the ground to move forward the electric bicycle, the front wheel is rotated by a force received from the ground, and finally the motor is rotated by the rotation of the front wheel to regenerate electric power. Hence, in such an electric bicycle, human power as a pedal force from the pedals is lost during transmission to the rear wheel through the chain (e.g., 95% of a transmitted force). Furthermore, the transmitted force is considerably reduced by a friction loss (e.g., 85% of the transmitted force) when the rear wheel comes into contact with the ground, a friction loss (e.g., 85% of the transmitted force) when the force is transmitted from the ground to the front wheel, and a loss (e.g., 95% of the transmitted force) when the force is transmitted from the hub of the front wheel to the motor. Consequently, as compared with riding with human power without a rotation of the motor, a large force (about 1.5 times larger than a force for actually rotating the motor) needs to be applied for pedaling.

The present invention has been devised to solve the problems. An object of the present invention is to provide an electric bicycle that can generate power to continuously turn on a head light while minimizing an increase in load to a rider, even in the case where the remaining capacity of an accumulator such as a battery decreases.

### Solution to Problem

In order to solve the problems, the present invention is an electric bicycle being capable of being driven by an auxiliary driving force generated by a motor in addition to human power generated by pedaling, the motor using an accumulator as a power supply, wherein a motor driving unit including the motor is disposed at an intermediate position between a front wheel and a rear wheel, the motor is a brushless motor, the human power generated by pedaling is transmitted to the rear wheel through a human power output ring body integrally rotatable with a crank shaft and an endless driving force transmitting member looped over the human power output ring body, the human power output ring body and a motor output shaft that outputs the auxiliary driving force of the motor are connected in an interlocked manner, a force transmission path between the motor output shaft and the human power output ring body has no clutches in the motor driving unit, human power generated by pedaling without an auxiliary driving force is always transmitted to the motor, and a regenerative control unit is provided for regeneration by the regeneration operation of the motor, the regenerative control unit generating electric power by the regeneration operation of the motor when the human power generated by pedaling is transmitted to the motor to rotate the motor. Preferably, an auxiliary driving force output ring body that outputs the auxiliary driving force from the motor driving unit is engaged with the endless driving force transmitting member, a force transmission path between the motor output shaft and the auxiliary driving force output ring body has no clutches in the motor driving unit, and human power generated by pedaling without an auxiliary driving force is always transmitted to the motor through the endless driving force transmitting member and the auxiliary driving force output ring body. Alternatively, the human power output ring body may be attached to a hollow external rotating shaft rotatably disposed around the crank shaft, and a speed reducing mechanism may be disposed between the external rotating shaft and the motor output shaft.

With this configuration, during pedaling without an auxiliary driving force, for example, when the remaining capacity of the accumulator is small, human power based on a pedal force from pedals is transmitted to the motor through the human power output ring body and the endless driving force transmitting member to rotate the motor. On the force transmission path, human power transmitted through the endless driving force transmitting member is slightly lost but the pedal force transmitted from the pedals to the motor hardly decreases. Thus, unlike in the case where the motor is installed in the hub of the front wheel, the motor can be satisfactorily rotated only by pedaling with a relatively small force. Since the motor is not a brush motor but a brushless motor, electric power can be generated while minimizing an increase in the pedal force of the pedals for rotating the motor.

The present invention further includes a lighting unit capable of being turned on with the accumulator serving as a power supply, a lighting setting unit that sets turning on or off of the lighting unit, a remaining capacity detection part that detects the remaining capacity of the accumulator, and a lighting control unit that controls the operation of the lighting unit, wherein the lighting control unit turns on the lighting unit by means of the electric power generated by the regeneration operation of the motor. With this configuration, even in the case where the remaining capacity of the accumulator decreases and an auxiliary driving force cannot be outputted, the lighting unit can be continuously turned on by pedaling.

The regenerative control unit according to the present invention charges the accumulator by means of the electric power generated by the regeneration operation of the motor. With this configuration, even in the case where the remaining capacity of the accumulator decreases and an auxiliary driving force cannot be outputted, the accumulator can be charged by pedaling.

The present invention further includes, on a motor connecting part for receiving electricity generated by the regeneration operation of the motor, a regenerated electricity detecting unit that detects one of a voltage, a current, and power of the electricity generated by the regeneration operation, and an input limiting unit that limits the input of the electricity generated by the regeneration operation in the case where one of the voltage, current and power of the electricity generated by the regeneration operation exceeds a predetermined value.

With this configuration, in the case where the pedals are rotated with a high speed and the regeneration operation of the motor generates one of an extremely high voltage, current, or power, this state is detected by the regenerated electricity detecting unit and the input limiting unit limits the input of the electricity generated by the regeneration operation, thereby preventing damage on an electric circuit connected to the motor connecting part.

In the case where the remaining capacity of the accumulator is equal to or smaller than a predetermined remaining capacity, when the human power generated by pedaling is transmitted to the motor to rotate the motor, the regenerative control unit according to the present invention generates electric power by the regeneration operation of the motor, and the accumulator is charged by the electric power generated by the regeneration operation of the motor.

The present invention further includes a lighting unit capable of being turned on with the accumulator serving as a power supply, a lighting setting unit that sets turning on or off of the lighting unit, a remaining capacity detection part that detects the remaining capacity of the accumulator, and a lighting control unit that controls the operation of the lighting unit, wherein in the case where the remaining capacity of the accumulator is equal to or smaller than a predetermined remaining capacity, when the human power generated by pedaling is transmitted to the motor to rotate the motor, the regenerative control unit generates, by the regeneration operation of the motor, a larger amount of charge than an amount of charge capable of turning on the lighting unit, and the accumulator is charged by the electric power generated by the regeneration operation of the motor, the lighting unit being configured to be turned on even when pedaling is stopped. With this configuration, the lighting unit can be turned on even when pedaling is stopped.

### Advantageous Effects of Invention

According to the present invention, human power generated by pedaling without an auxiliary driving force hardly decreases during transmission to the motor. Thus, unlike in the case where the motor is installed in the hub of the front wheel, the motor can be satisfactorily rotated to generate electric power only by pedaling with a relatively small force. Hence, the lighting unit provided on the electric bicycle can be turned on at night by the generated electricity and a load to the rider can be reduced.

According to the present invention, even in the case where the pedals are rotated with a high speed and the regeneration operation of the motor generates one of an extremely high voltage, current, or power, the input limiting unit limits the input of electricity generated by the regeneration, thereby preventing damage on the electric circuit connected to the motor connecting part with higher safety. Thus, the reliability of the electric bicycle can be improved.

### Brief Description of Drawings

[FIG. 1] FIG. 1 is an overall side view of an electric bicycle according to an embodiment of the present invention.
[FIG. 2] FIG. 2 is a partial cutaway side view of the electrical bicycle.
[FIG. 3] FIG. 3 is a perspective view illustrating a motor driving unit and the vicinity of the motor driving unit in the electric bicycle.
[FIG. 4] FIG. 4(a) illustrates a handlebar unit from diagonally above in the electric bicycle.
   FIG. 4(b) illustrates the left side of the handlebar unit from behind the handlebar unit.
   FIG. 4(c) is a plan view illustrating a manual operator of the handlebar unit.
[FIG. 5] FIG. 5 is a block diagram of the electric bicycle.
[FIG. 6] FIG. 6 is a planar cross-sectional view schematically illustrating the motor driving unit of the electric bicycle.
[FIG. 7] FIG. 7 is a planar cross-sectional view schematically illustrating a motor driving unit as a comparative example.
[FIG. 8] FIG. 8 is a flowchart showing the control action of a control unit in the electric bicycle.
[FIG. 9] FIG. 9 is a partial cutaway side view of an electric bicycle according to another embodiment of the present invention.
[FIG. 10] FIG. 10 is a planar cross-sectional view schematically illustrating a motor driving unit in the electric bicycle according to the embodiment.

### Description of Embodiments

An electric bicycle according to an embodiment of the present invention will be described below with reference to the accompanying drawings.

### [Overall Configuration]

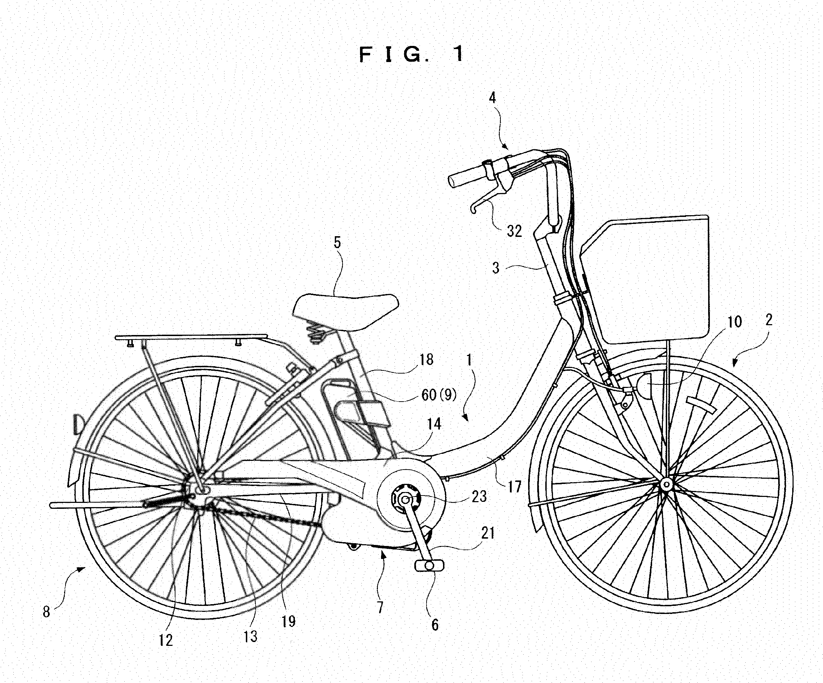

As illustrated in FIGS. 1 to 3, the electric bicycle according to the embodiment of the present invention includes a frame unit 1, a front wheel 2, a handlebar stem 3, a handlebar unit 4, a saddle 5, pedals 6, a motor driving unit 7 including a motor 25, a rear wheel 8, a battery unit 60 including a battery 9 acting as a power supply composed of a secondary cell, a front sprocket (so-called crank gear) 11 acting as a human power output ring body, a rear sprocket (so-called rear wheel gear) 12 acting as a rear ring body, a chain 13 acting as an endless driving force transmitting member, a chain cover 14, a head light 10 acting as a lighting unit, and a control unit 30. In the present embodiment, the control unit 30 is disposed in the motor driving unit 7. The present embodiment is not limited to this configuration. The control unit 30 may be disposed in a different location from the motor driving unit 7.

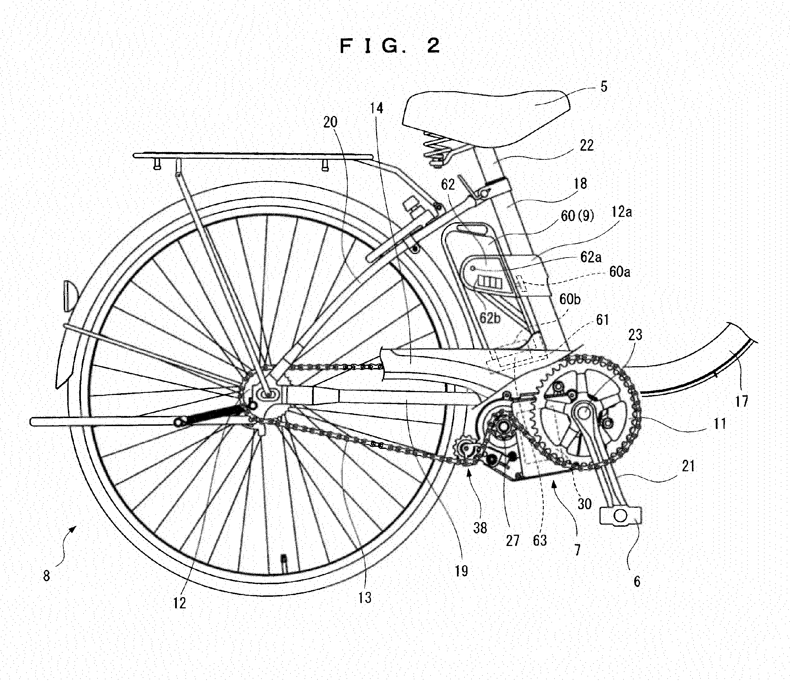

As illustrated in FIGS. 1 to 3, the frame unit 1 includes a main frame 17, a seat tube 18, a hanger lug 24, and a chain stay 19. The pedals 6 are rotatably attached to two ends of a crank 21 and receive a pedal force as human power. The motor driving unit 7 includes the control unit 30 and the motor 25 and rotatably supports a crank shaft 23 on which the pedals 6 are attached via the crank 21. The battery 9 is an example of an accumulator and a secondary cell is preferably used. Another example of the accumulator may be a capacitor. The rear wheel 8 is rotatably attached to the rear end of the chain stay 19. When a pedal force is applied to the pedals 6, the crank 21 rotates about the crank shaft 23 to transmit a rotary force to the rear wheel 8 via the chain 13. Reference numeral 38 in FIG. 2 denotes a guide pulley that guides the chain 13 so as to increase the winding angle of the chain 13 around an auxiliary driving force output sprocket 27.

### [Handlebar unit]

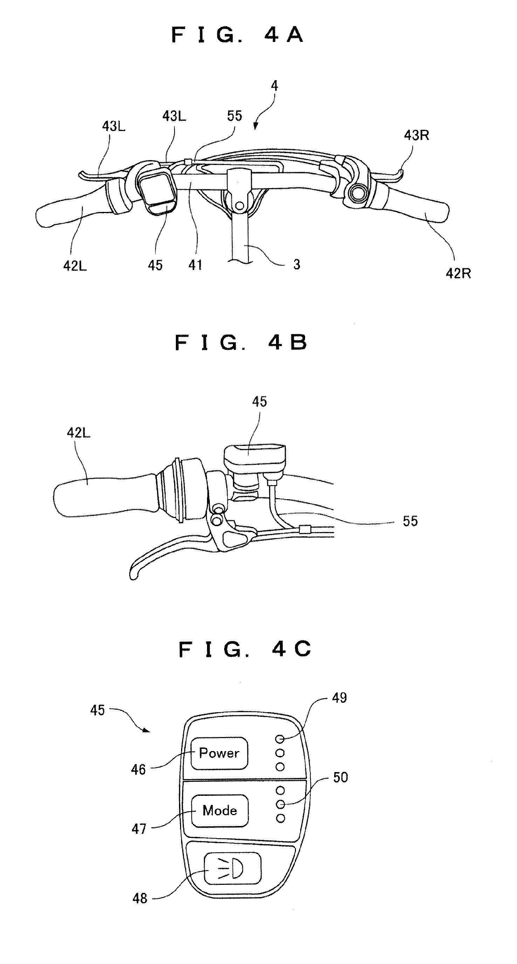

As illustrated in FIGS. 4(a) to 4(c), the handlebar unit 4 includes a handlebar 41 that laterally extends and is attached to the upper end of the handlebar stem 3. A left handlebar grip 42L and a right handlebar grip 42R and a left brake lever 43L and a right brake lever 43R are provided on the respective ends of the handlebar 41.

On the handlebar 41, a manual operator 45 is attached near the handlebar grip 42L or 42R (the manual operator 45 may be located on either side, on the left side in FIGS. 4(a) and 4(b)). FIG. 4(c) illustrates the manual operator 45. The manual operator 45 includes an auxiliary driving operation switch 46 that can be operated to provide instructions (ON/OFF) to permit and prohibit an auxiliary driving operation of the motor driving unit 7, an auxiliary mode selecting switch 47 that can select assistance types (modes), e.g., the auxiliary driving strength of the motor driving unit 7, and a light switch 48 (light setting unit) that can be operated (ON/OFF) to turn on and off the head light 10.

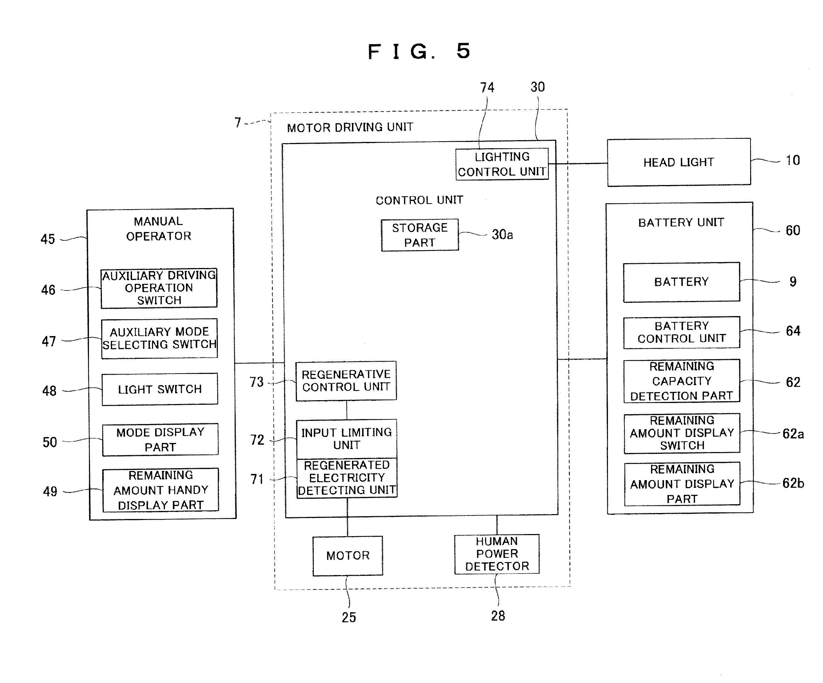

Furthermore, a remaining amount handy display part 49 that displays the current remaining capacity of the battery 9 is provided near the auxiliary driving operation switch 46. Moreover, a mode display part 50 that displays the current auxiliary driving-force load type (mode) is provided near the auxiliary mode selecting switch 47. The manual operator 45 has a simple communication function and an arithmetic function. As shown in FIG. 5, the display contents are determined by communications and calculations with the control unit 30. In the example of FIG. 4(c), the switches 46, 47, and 48 are push buttons and the display parts 49 and 50 each include multiple LEDs. The manual operator 45 may be configured to enable more complicated operations and displays. From the manual operator 45, a manual operator cable 55 is extended to transmit electric signals to the control unit 30 in response to the operations of the switches 46, 47, and 48.

[The battery, the battery unit, etc.]
The configurations of the battery 9 and the battery unit 60 will be described below.

The battery 9 acting as a power supply composed of a secondary cell is disposed in the battery unit 60 (see FIG. 5). As illustrated in FIG. 2, the battery unit 60 is supported on a battery support bracket 61 attached to the upper rear of the hanger lug 24. The battery unit 60 includes a battery unit locking part 60a that is locked to a seat tube locking part 12a provided on the seat tube 18. The battery unit 60 can be detached from the main body of the electric bicycle by separating the locked parts. An energized connecting part 60b is provided under the battery unit 60, allowing energy accumulated in the battery 9 to be collected as electric energy from the energized connecting part 60b. The battery 9 may be, for example, a lithium-ion battery or a nickel hydrogen battery. The battery 9 outputs a voltage of, e.g., 24 V.

The battery unit 60 further includes a remaining capacity detection part 62 that detects the remaining capacity of the battery 9. The remaining capacity detection part 62 includes a remaining amount display switch 62a (a push button in FIG. 2) and a remaining amount display part 62b (multiple LEDs in FIG. 2) that are provided on the surface of the remaining capacity detection part 62. When the remaining amount display switch 62a is operated (pressed), the remaining amount display part 62b indicates the estimated remaining capacity of the battery 9 (by the number of illuminated LEDs, a lighting pattern, and so on). The remaining capacity of the battery 9 may be detected by detecting the output voltage of the battery 9 with a voltmeter or measuring a current from the battery 9 (or to the battery 9), and then integrating the current.

As schematically illustrated in FIG. 2, the battery support bracket 61 has a power supply terminal 63 connected to the energized connecting part 60b of the battery unit. The power supply terminal 63 is connected to the control unit 30 (will be specifically described later) provided in the motor driving unit 7. The battery 9 is attached so as to connect the energized connecting part 60b of the battery unit 60 to the power supply terminal 63. Thus, the control unit 30 receives electric energy from the battery 9 to enable electric operation control. Moreover, the power supply terminal 63 is connected to the energized connecting part 60b to transmit the remaining capacity of the battery 9 to the control unit 30, the remaining capacity being detected by the remaining capacity detection part 62. The battery unit 60 also includes a battery control unit 64 that inputs and outputs information about charge/discharge control, the remaining capacity, and so on of the battery 9.

### [The motor driving unit, the driving-force transmission path of the chain, etc.]

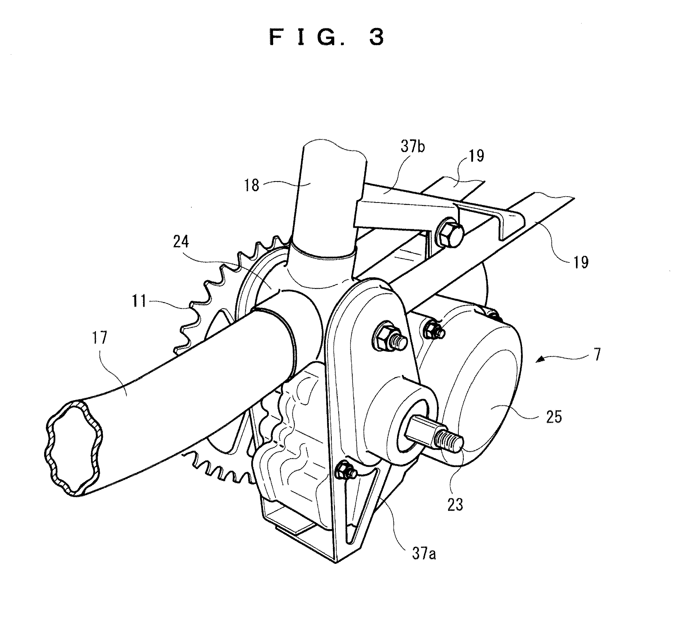

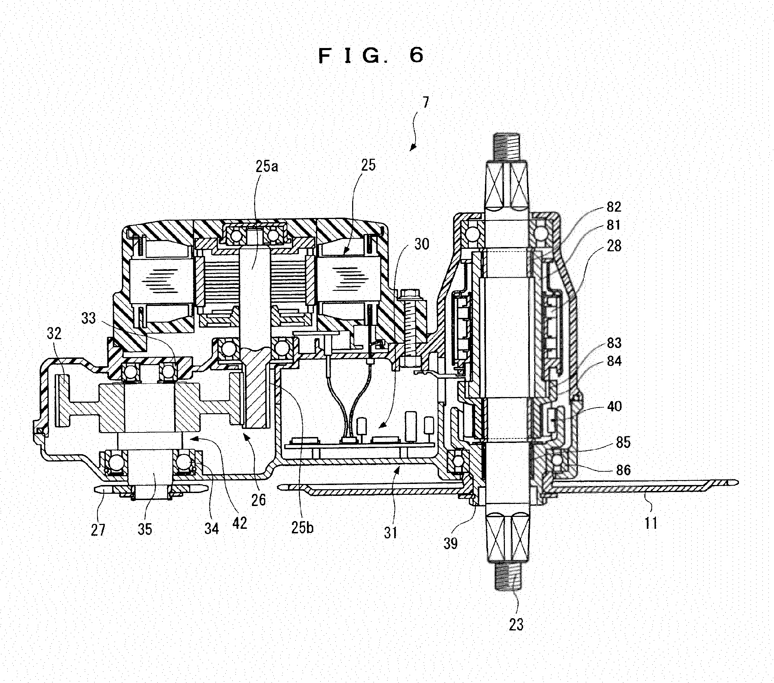

As illustrated in FIG. 1 and so on, the electric bicycle according to the embodiment of the present invention includes the motor driving unit 7 installed under an intermediate position between the front wheel 2 and the rear wheel 8. Specifically, as illustrated in FIG. 3, the motor driving unit 7 is fixed near the hanger lug 24 of the frame unit 1 via support brackets 37a and 37b. Thus, as has been discussed, the motor driving unit 7 is installed at the intermediate position (that is, a central part) between the front wheel 2 and the rear wheel 8. As illustrated in FIG. 6, the motor driving unit 7 includes the motor 25 that generates an auxiliary driving force, a speed reducing mechanism 26, the auxiliary driving force output sprocket 27 acting as an auxiliary driving force output ring body, a human power detector 28 that detects a pedal force from the pedals 6, the control unit 30, and a unit case 31. The speed reducing mechanism 26 includes a reduction gear part 25b of a motor output shaft 25a and a reduction gear 32. The auxiliary driving force output sprocket 27 for outputting an auxiliary driving force is attached to the end of an auxiliary driving force output shaft 35 that is rotatably supported by bearings 33 and 34. Specifically, the motor 25 is a brushless motor having no brushes. The rotor and the stator of the motor 25 are in contact with each other only on a bearing that rotatably supports the rotor.

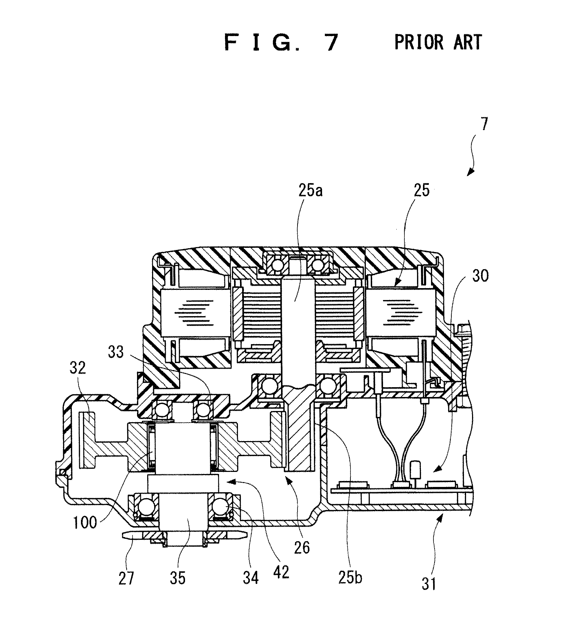

FIG. 7 shows, as a comparative example, a typical electric bicycle including a motor driving unit disposed at an intermediate position between a front wheel and a rear wheel. In the comparative example, a one way clutch 100 is disposed on a transmission path (in FIG. 7, between the reduction gear 32 and the auxiliary driving force output shaft 35) between the motor output shaft 25a that is the output shaft of the motor 25 and the auxiliary driving-force output ring body (the auxiliary driving force output sprocket 27). Thus, when an auxiliary driving force is outputted, the auxiliary driving force from the motor 25 is transmitted to the chain 13, which is an endless driving force transmitting member, through the one way clutch 100, and then the auxiliary driving force is added to human power to rotate the rear wheel 8. When an auxiliary driving force is not outputted, a pedal force generated by pedaling is cut off by the one way clutch 100 and is not transmitted to the motor 25 even if the pedals 6 are pressed. Hence, in the typical electric bicycle including the motor driving unit disposed at the intermediate position between the front wheel 2 and the rear wheel 8, the motor 25 cannot be rotated by pressing the pedals 6 and thus a regeneration operation cannot be performed.

In contrast, in the electric bicycle according to the embodiment of the present invention, a clutch like the one way clutch 100 is not disposed on a force transmission path between the motor output shaft 25a and the auxiliary driving force output sprocket 27 (specifically, between the reduction gear 32 and the auxiliary driving force output shaft 35). When an auxiliary driving force is not outputted, the crank 21 and the front sprocket 11 are rotated by pressing the pedals 6, and the chain 13 is moved clockwise in FIG. 2 in response to the rotation so as to rotate the auxiliary driving force output sprocket 27 and the auxiliary driving force output shaft 35 counterclockwise in FIG. 2; meanwhile, human power based on the pedal force of the pedals 6 is always transmitted to the motor 25 through the speed reducing mechanism 26 (the reduction gear 32 and the reduction gear part 25b of the motor output shaft 25a). In the electric bicycle according to the embodiment of the present invention, electric power can be generated by performing a regeneration operation while pressing the pedals 6 to rotate the motor 25.

As illustrated in FIG. 6, in the present embodiment, the motor driving unit 7 contains the control unit 30 that includes a control board for various kinds of control, e.g., the generation of an auxiliary driving force and a storage part 30a. The human power detector 28 is provided near the crank shaft 23 in the motor driving unit 7 to detect human power (pedal force) applied to the pedals 6. The human power detector 28 is, for example, a magnetostrictive sensor (that is made of a material varied in magnetic permeability by an external force and includes a search coil for reading variations in magnetic permeability as changes in magnetic flux), thereby detecting human power. The sensor and the arithmetic section of the human power detector 28 may be separately provided and thus do not always need to be attached near the crank shaft 23. The detected pedal force signal of human power detected by the human power detector 28 is transmitted to the control unit 30 through a detected pedal force transmitting cable (not shown).

In the motor driving unit 7, a pedal force from the pedals 6 is detected by the human power detector 28 and then an auxiliary driving force generated from the motor 25 according to the pedal force is outputted from the auxiliary driving force output sprocket 27 through the speed reducing mechanism 26. The human power and the auxiliary driving force are applied to the chain 13 and are transmitted to the rear wheel 8 through the rear sprocket 12 and so on. This facilitates riding of the electric bicycle even on an uphill road.

The chain 13 is engaged with the rear sprocket 12 on the rear wheel 8. A one way clutch (not shown) is disposed between the rear sprocket 12 and the hub of the rear wheel 8. In the case where the rear wheel 8 is rotated without pressing the pedals 6 during inertial driving (free running) and so on, the one way clutch goes into an idle state, thereby preventing the rotation of the rear sprocket 12 and the movement of the chain 13. In other words, the rotation of the rear wheel 8 is not transmitted to the chain 13 during inertial driving.

In the present embodiment, a hollow crank external shaft 81 is fitted on the opposite side of the crank shaft 23 from the front sprocket 11 (in the present embodiment, on the left side with respect to a traveling direction). The hollow crank external shaft 81 integrally rotates via a first spline 82. Furthermore, a hollow external intermediate shaft 84 is disposed near the front sprocket 11 (in the present embodiment, on the right side with respect to the traveling direction). The external intermediate shaft 84 is adjacent to the crank external shaft 81 via a second spline 83 so as to rotate integrally with the crank external shaft 81. Moreover, a hollow external rotating shaft 39 is disposed near the front sprocket 11 (in the present embodiment, on the right side with respect to the traveling direction). The external rotating shaft 39 is adjacent to the external intermediate shaft 84 via a one way clutch 40 and is rotatably fitted over the crank shaft 23 via bearings 85 and 86. The front sprocket 11 is attached to the end of the external rotating shaft 39 and is integrally rotated thereon. For example, when the one way clutch 40 stops the rotations of the pedals 6 during riding so as to enable so-called coasting, even in the case where the chain 13 is moved by the auxiliary driving force of the motor 25, that is, the rotation speed of the auxiliary driving force output sprocket 27 engaged with the chain 13 is higher than that of the front sprocket 11 engaged with the chain 13, the one way clutch 40 does not forcibly rotate the crank 21 and the pedals 6.

The control unit 30 is connected to the detected pedal force transmitting cable, a brake wire, a brake switch cable, a manual operator cable (not shown), and so on to receive (input) operation condition information about the parts of the electric bicycle and transmit (output) control signals to the parts of the electric bicycle from the control unit 30. As illustrated in FIG. 5, the control unit 30 includes a regenerative control unit 73 that causes the motor to regenerate power, and a lighting control unit 74 that controls the operation of the head light 10 acting as a lighting unit. The control unit 30 is electrically connected to the head light 10, the motor 25, and so on via cables or the like, allowing the control unit 30 to transmit control signals from the control unit 30 to the head light 10, the motor 25, and so on and electrically receive operation condition information about the head light 10 and the motor 25 from the head light 10, the motor 25 and so on. The cables (bundles of cables) also act as power supply lines for supplying power from the battery 9 to electrical apparatuses including the head light 10 and the motor 25.

### [The control unit and the control contents]

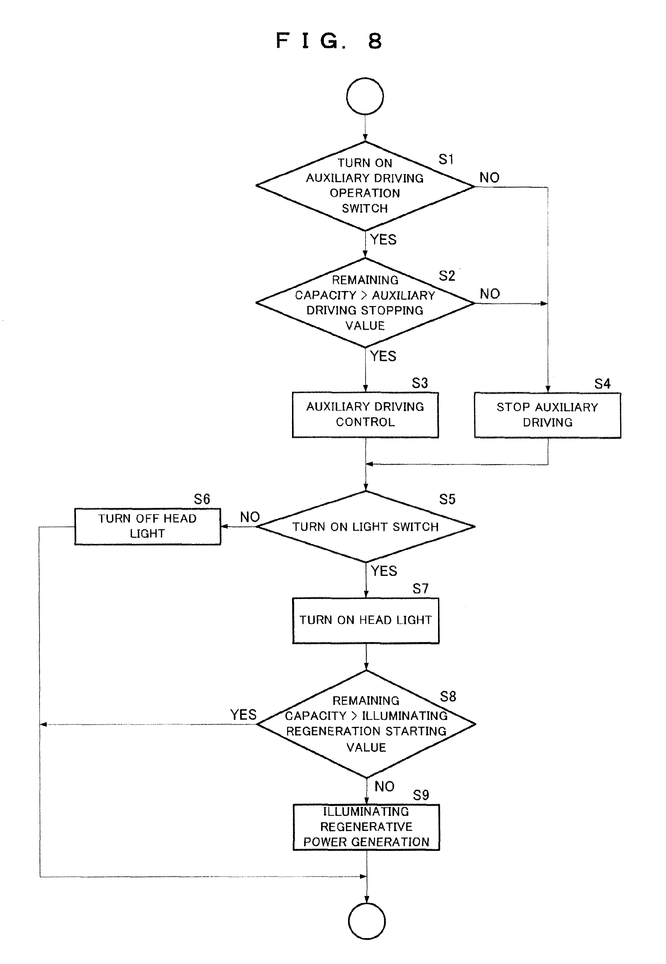

FIG. 8 is a flowchart showing the control action of the control unit 30 in the electric bicycle according to the embodiment of the present invention. In FIG. 8, the remaining capacity of the battery 9 at the start of the illumination of the head light 10 (hereinafter, will be also referred to as an illuminating regeneration starting value) is smaller than a remaining capacity for stopping the motor 25 (hereinafter, will be also referred to as an auxiliary driving stopping value).

The control unit 30 receives, when necessary, a state of the auxiliary driving operation switch 46 of the manual operator 45, information about the remaining capacity of the battery 9, and a state of the light switch 48 of the manual operator 45. In the case where the auxiliary driving operation switch 46 of the manual operator 45 is turned on to permit an auxiliary driving operation and the remaining capacity of the battery 9 is larger than the auxiliary driving stopping value, the process advances from step S1 to steps S2 and S3 in FIG. 8 to control auxiliary driving, thereby generating an auxiliary driving force corresponding to human power detected by the human power detector 28.

In the case where the remaining capacity of the battery 9 decreases as least to the auxiliary driving stopping value for stopping the motor 25 during long-distance riding, the process advances from step S1 to steps S2 and S4 to stop the control action of auxiliary driving, thereby preventing the motor 25 from being rotated by the electric power of the battery 9.

In step S5, it is confirmed that the light switch 48 of the manual operator 45 is turned on or off. In the case where the light switch 48 is turned off, the process advances to step S6 to turn off the head light 10. In the case where the switch 48 is turned on, the process advances from step S5 to step S7 to turn on the head light 10, and then advances to step S8 to confirm whether or not the remaining capacity of the battery 9 is larger than the illuminating regeneration starting value. In the case where the remaining capacity of the battery 9 is larger than the illuminating regeneration starting value, the head light 10 is turned on by the battery 9 without regeneration. In the case where the remaining capacity of the battery 9 is equal to or smaller than the illuminating regeneration starting value, the process advances from step S8 to step S9 to regeneratively control the motor 25. Then, electric power is generated by the regeneration operation of the motor 25 to turn on the head light 10. In place of directly turning on the head light 10 by electric power generated by the regeneration operation of the motor 25, the regenerative control unit 73 provided in the control unit 30 may temporarily charge the battery 9 by the electric power regenerated by the regeneration operation of the motor 25 and then the head light 10 may be turned on by the electric power of the battery 9.

A method of controlling regenerative power generation will be discussed below. For example, in the case where the motor 25 of the motor driving unit 7 is a brushless motor operated by a three-phase signal, the state of rotation is detected by a Hall element or the like, and the ON/OFF period of a switching element contained in the motor drive circuit or the like of the motor 25 is controlled according to the state of rotation of the motor 25. Thus, the motor 25 is operated as a generator, allowing regenerative power generation. The generated electric power turns on the head light 10 or charges the battery 9. At this point, the motor 25 is operated as a generator to convert the kinetic energy of the motor 25 to electrical energy, which turns on the head light 10 and charges the battery 9.

In the electric bicycle according to the embodiment of the present invention, in the case where the remaining capacity of the battery 9 reaches the illuminating regeneration starting value and the light switch 48 of the manual operator 45 is set at an illuminating side, the regeneration operation of the motor 25 is performed. At this point, in the case where a rider rotates the pedals with an extremely high speed, the regeneration operation of the motor 25 generates an extremely high voltage that may damage an electric circuit. Hence, as illustrated in FIG. 5, a regenerated electricity detecting unit 71 and an input limiting unit 72 are provided on a connecting portion from the motor 25 in the control unit 30 (specifically, a point for inputting generated electric power from the motor 25 to the regenerative control unit 73 of the control unit 30). The regenerated electricity detecting unit 71 detects at least one of the voltage, current, and power of electricity generated by the regeneration operation of the motor 25. The input limiting unit 72 limits the input of electric power generated by the regeneration operation of the motor 25 in the case where the voltage or current detected by the regenerated electricity detecting unit 71 is larger than a predetermined upper-limit voltage value, a predetermined upper-limit current value, and a predetermined upper-limit power value. In the case where the voltage value or the current value detected by the regenerated electricity detecting unit is larger than the predetermined upper-limit voltage value, the predetermined upper-limit current value, or the predetermined upper-limit power value, the input limiting unit 72 interrupts the input of electric power generated by the regeneration operation of the motor 25 or limits the generated electric power to predetermined power or less (such that the generated voltage is equal to or lower than a predetermined voltage or the generated current is equal to or lower than a predetermined current).

In the present embodiment, as illustrated in FIG. 8, the illuminating regeneration starting value indicating the remaining capacity of the battery 9 at the start of the illumination of the head light 10 is set lower than the auxiliary driving stopping value indicating the remaining capacity when the motor 25 is stopped. The illuminating regeneration starting value is not particularly limited and thus may be equal to the auxiliary driving stopping value. Electric power slightly larger than electric power for turning on the head light 10 may be generated in regenerative control for performing the regeneration operation of the motor 25 to turn on the head light 10. Thus, the head light 10 can be continuously turned on by the battery 9 even when the electric bicycle is stopped by stopping pressing the pedals 6. In this case, a lower-limit remaining capacity value (smaller than the illuminating regeneration starting value) is set beforehand to prevent overdischarge of the battery 9. In the case where the remaining capacity of the battery 9 is not larger than the lower-limit remaining capacity value, the head light 10 turned on by the battery 9 is desirably turned off when the electric bicycle is stopped.

With this configuration, when the remaining capacity detection part 62 detects that the remaining capacity of the battery 9 is not larger than the remaining capacity for stopping the motor 25 (auxiliary driving stopping value), the control unit 30 does not perform an operation for generating an auxiliary driving force. When the battery 9 reaches the remaining capacity for illumination (illuminating regeneration starting value), it is decided whether or not the light switch 48 of the manual operator 45 is set at the illuminating side. In the case where the light switch 48 of the manual operator 45 is set at the illuminating side, the motor 25 is allowed to regenerate electric power. The control unit 30 (lighting control unit 74) controls the head light 10 so as to turn on the head light 10 by the regenerated electric power. Thus, even in the case where the remaining capacity of the battery 9 decreases, the motor 25 regenerates electric power to turn on the head light 10 as long as the crank 21 is rotated by pressing the pedals 6.

At this point, human power based on a pedal force from the pedals 6 is transmitted to the chain 13 through the crank 21 and the front sprocket 11 and then is transmitted to the motor 25 from the chain 13 through the auxiliary driving force output sprocket 27 and the speed reducing mechanism 26 (the auxiliary driving force output shaft 35, the reduction gear 32, and the motor output shaft 25a), thereby rotating the motor 25. Thus, the pedal force transmitted from the pedals 6 to the motor hardly decreases, even in the presence of a small transmission loss from the front sprocket 11 to the chain 13 (for example, 97% of the transmitted force) and a small transmission loss from the chain 13 to the auxiliary driving force output sprocket 27 (for example, 97% of the transmitted force). Moreover, unlike in the case where the motor is installed in the hub of the front wheel as disclosed in cited document 1 or 2, the motor 25 can be satisfactorily rotated by applying only a small force to the pedals 6. Since the motor 25 is not a brush motor but a brushless motor, electric power can be generated while minimizing an increase in the pedal force of the pedals 6 for rotating the motor 25. Hence, a lighting unit, e.g., the head light 10 can be turned on at night by generated electricity. Even in the case where the remaining capacity of the battery 9 decreases at night, the head light 10 can be turned on with improved safety as long as the pedals 6 are pressed to rotate the crank 21. Hence, according to the present invention, lighting units such as the head light 10 provided on the electric bicycle can be turned on at night by generated electricity and a load to the rider can be reduced.

According to the present invention, clutches such as the one way clutch 100 are not disposed on the force transmission path between the motor output shaft 25a and the auxiliary driving force output sprocket 27. Thus, in the case where the pedals 6 are rotated with a high speed while the battery 9 reaches the remaining capacity for illumination, the regeneration operation of the motor 25 generates an extremely high voltage that may cause damage on an electric circuit. According to the present invention, however, the input limiting unit 72 is provided in a location where generated electric power is inputted from the motor 25 to the control unit 30. In the case where electric power generated by the regeneration operation of the motor 25 exceeds the predetermined upper-limit power value, the input limiting unit 72 limits the electric power generated by the regeneration operation of the motor 25. Thus, even in the case where the pedals 6 are rotated with a high speed while the battery 9 reaches the remaining capacity for illumination, the input limiting unit 72 prevents an extremely high voltage and electric power from flowing into the electric circuit of the control unit 30. Consequently, the electric circuit can be provided in the control unit 30 with improved safety, increasing the reliability of the electric bicycle.

In the present embodiment, a pedal force (human power) from the pedals 6 is transmitted from the front sprocket 11 acting as a human power output ring body to the chain 13 acting as an endless driving force transmitting member while an auxiliary driving force from the motor 25 is transmitted to the chain 13 through the auxiliary driving force output sprocket 27 acting as an auxiliary driving force output ring body. Thus, the human power and the auxiliary driving force are combined by the chain 13 and are transmitted to the rear wheel 8. The present embodiment is not limited to this configuration.

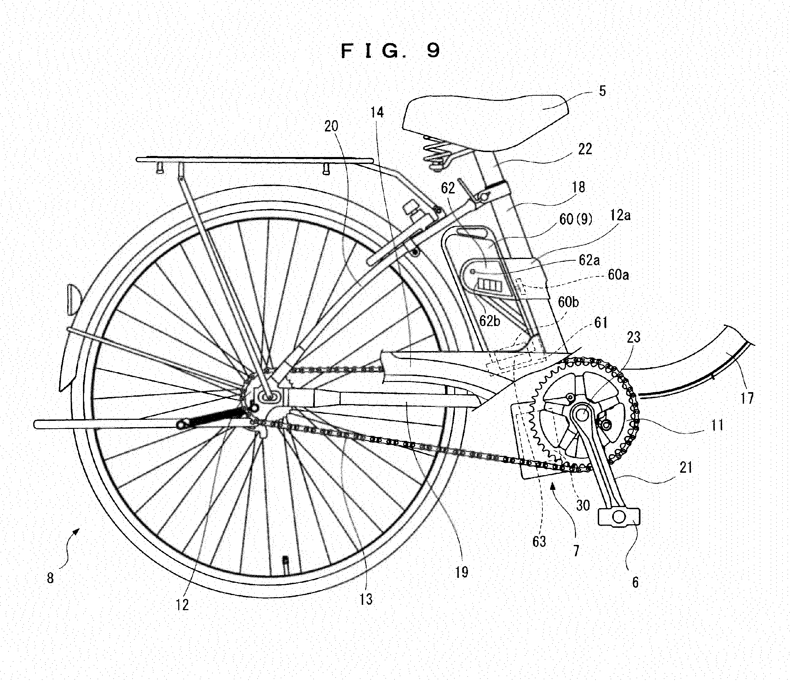

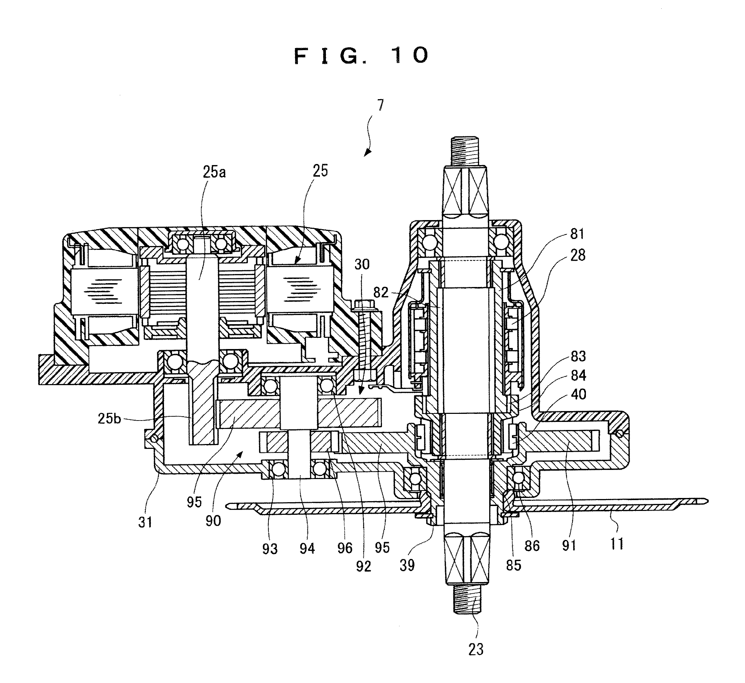

FIGS. 9 and 10 are a partial cutaway side view of an electric bicycle according to another embodiment of the present invention, and a planar cross-sectional view schematically illustrating a motor driving unit in the electric bicycle. As illustrated in FIGS. 9 and 10, in the present embodiment, an auxiliary driving force output sprocket 27 engaged with a chain 13 is not provided. An external rotating shaft 39 having a front sprocket 11 on one end (the right end in the present embodiment) has a large-diameter auxiliary driving force input gear 91 around the other end (the right end in the present embodiment) of the external rotating shaft 39. The auxiliary driving force input gear 91 receives an auxiliary driving force from a motor. In the present embodiment, the external rotating shaft 39 and the auxiliary driving force input gear 91 are integrally formed. The auxiliary driving force from a motor 25 is transmitted to the external rotating shaft 39 through a speed reducing mechanism 90 containing the auxiliary driving force input gear 91, and then the auxiliary driving force is added to human power (pedal force). The combined force is then transmitted to a rear wheel 8 through the chain 13. In the present embodiment, a large-diameter reduction gear 95 and a small-diameter reduction gear 96 are attached to a reduction shaft 94 that is rotatably supported by a unit case 31 via bearings 92 and 93, the large-diameter reduction gear 95 is engaged with a reduction gear part 25b formed on the end of a motor output shaft 25a, and the auxiliary driving force input gear 91 is engaged with the small-diameter reduction gear 96. The auxiliary driving force from the motor 25 is transmitted to the external rotating shaft 39 and the front sprocket 11 during deceleration by the reducing mechanism 90, that is, with increased torque. In this configuration, clutches such as a one way clutch are not disposed between the external rotating shaft 39 and the motor output shaft 25a.

Thus, when pedals 6 are pressed without an auxiliary driving force, a crank 21 and the front sprocket 11 are rotated. Accordingly, human power based on the pedal force of the pedals 6 is always transmitted to the motor 25 through the speed reducing mechanism 90. Hence, as in the foregoing embodiment, the electric bicycle according to the present embodiment can generate electric power by performing a regeneration operation while pressing the pedals 6 to rotate the motor 25.

Also in this configuration, the electric bicycle is controlled by a control unit disposed in a location (not shown) in a motor driving unit 7 as in the foregoing embodiment. Thus, even in the case where the remaining capacity of a battery 9 decreases, the motor 25 regenerates power to turn on a head light 10 as long as the crank 21 is rotated by pressing the pedals 6. At this point, human power based on a pedal force from the pedals 6 is transmitted to the motor 25 from the crank 21 through the external rotating shaft 39 and the speed reducing mechanism 90, thereby rotating the motor 25. Thus, the pedal force transmitted from the pedals 6 to the motor is hardly reduced. Unlike in the case where the motor is installed in the hub of the front wheel as disclosed in cited document 1 or 2, the motor 25 can be satisfactorily rotated only by applying a small force to the pedals 6. Also in the present embodiment, lighting units such as the head light 10 provided on the electric bicycle can be turned on at night by generated electricity and a load to a rider can be reduced.

In the present embodiment, the head light 10 is turned on. Lighting units other than the head light, for example, a taillight may be turned on or off. When a remaining capacity detection part 62 detects that the battery 9 is not larger than a remaining capacity for stopping the motor 25 (auxiliary driving stopping value), the battery 9 may be charged to a predetermined voltage by a regeneration operation even in the case where a light switch 48 in a manual operator 45 is set at a shutoff side. At this point, a minimum auxiliary driving operation may be performed.

In the present embodiment, the chain 13 is an endless driving force transmitting member for transmitting a pedal force from the pedals 6 to the rear wheel. The endless driving force transmitting member is not limited to the chain 13 and may be a toothed belt. Similarly, in the case where a toothed belt (driving force transmitting toothed belt) is used, the auxiliary driving force output sprocket 27 may be replaced with an auxiliary driving force output gear as an auxiliary driving force output ring body for outputting an auxiliary driving force while a rear sprocket 12 may be replaced with a rear gear as a rear wheel.

### Industrial Applicability

The present invention is applicable to various electric bicycles that can apply an auxiliary driving force and include central motor driving units.

## Claims

1. An electric bicycle being capable of being driven by an auxiliary driving force generated by a motor in addition to human power generated by pedaling, the motor using an accumulator as a power supply,
wherein a motor driving unit including the motor is disposed at an intermediate position between a front wheel and a rear wheel,
the motor is a brushless motor,
the human power generated by pedaling is transmitted to the rear wheel through a human power output ring body integrally rotatable with a crank shaft and an endless driving force transmitting member looped over the human power output ring body,
the human power output ring body and a motor output shaft that outputs the auxiliary driving force of the motor are connected in an interlocked manner,
a force transmission path between the motor output shaft and the human power output ring body has no clutches in the motor driving unit,
human power generated by pedaling without an auxiliary driving force is always transmitted to the motor, and
a regenerative control unit is provided for regeneration by a regeneration operation of the motor,
the regenerative control unit generating electric power by the regeneration operation of the motor when the human power generated by pedaling is transmitted to the motor to rotate the motor.

2. The electric bicycle according to claim 1, wherein an auxiliary driving force output ring body that outputs the auxiliary driving force from the motor driving unit is engaged with the endless driving force transmitting member,
a force transmission path between the motor output shaft and the auxiliary driving force output ring body has no clutches in the motor driving unit, and
human power generated by pedaling without an auxiliary driving force is always transmitted to the motor through the endless driving force transmitting member and the auxiliary driving force output ring body.

3. The electric bicycle according to claim 1, wherein the human power output ring body is attached to a hollow external rotating shaft rotatably disposed around the crank shaft, and
a speed reducing mechanism is disposed between the external rotating shaft and the motor output shaft.

4. The electric bicycle according to any one of claims 1 to 3, further comprising:
a lighting unit capable of being turned on with the accumulator serving as a power supply;
a lighting setting unit that sets turning on or off of the lighting unit;
a remaining capacity detection part that detects a remaining capacity of the accumulator; and
a lighting control unit that controls an operation of the lighting unit,
wherein the lighting control unit turns on the lighting unit by means of the electric power generated by the regeneration operation of the motor.

5. The electric bicycle according to any one of claims 1 to 3, wherein the regenerative control unit charges the accumulator by means of the electric power generated by the regeneration operation of the motor.

6. The electric bicycle according to any one of claims 1 to 5, further comprising, on a motor connecting part for receiving electricity generated by the regeneration operation of the motor, a regenerated electricity detecting unit that detects one of a voltage, a current, and power of the electricity generated by the regeneration operation, and
an input limiting unit that limits an input of the electricity generated by the regeneration operation in the case where one of the voltage, current and power of the electricity generated by the regeneration operation exceeds a predetermined value.

7. The electric bicycle according to claim 5, wherein in the case where the remaining capacity of the accumulator is equal to or smaller than a predetermined remaining capacity, when the human power generated by pedaling is transmitted to the motor to rotate the motor, the regenerative control unit generates electric power by the regeneration operation of the motor, and the accumulator is charged by the electric power generated by the regeneration operation of the motor.

8. The electric bicycle according to claim 5, further comprising:
a lighting unit capable of being turned on with the accumulator serving as a power supply;
a lighting setting unit that sets turning on or off of the lighting unit;
a remaining capacity detection part that detects a remaining capacity of the accumulator; and
a lighting control unit that controls an operation of the lighting unit,
wherein in the case where the remaining capacity of the accumulator is equal to or smaller than a predetermined remaining capacity, when the human power generated by pedaling is transmitted to the motor to rotate the motor, the regenerative control unit generates, by the regeneration operation of the motor, a larger amount of charge than an amount of charge capable of turning on the lighting unit, and the accumulator is charged by the electric power generated by the regeneration operation of the motor, the lighting unit being configured to be turned on even when pedaling is stopped.
